Europäisches Patentamt

(19) European Patent Office

Office européen des brevets

(11) Publication number : **0 517 492 A1**

(12) **EUROPEAN PATENT APPLICATION**

(21) Application number : **92305065.2**

(22) Date of filing : **02.06.92**

(51) Int. Cl.⁵ : **H04L 12/40**

(30) Priority : **07.06.91 GB 9112287**

(43) Date of publication of application :
**09.12.92 Bulletin 92/50**

(84) Designated Contracting States :
**DE ES FR GB IT NL SE**

(71) Applicant : **BRITISH AEROSPACE PUBLIC LIMITED COMPANY**
**Warwick House, P.O. Box 87, Farnborough Aerospace Centre**
**Farnborough, Hants. GU14 6YU (GB)**

(72) Inventor : **Widdall, John Alan, British Aerospace Regional**
**Aircraft Ltd., Woodford Aerodrome, Chester Road**
**Woodford, Cheshire SK7 1QR (GB)**

(54) **Data bus systems.**

(57)   A data bus system suitable for use on board an aircraft for control of power switches, for example. Data is transmitted asynchronously between a bus controller (1) and a plurality of remote terminals (2) which are linked to the data bus (3) by transformer couplers (4). Data is modulated onto a carrier for efficient transmission via the couplers (4). Asynchronous operation ensures use of a simple protocol and inexpensive interface hardware.

Fig. 2.

Jouve, 18, rue Saint-Denis, 75001 PARIS

This invention relates to data bus systems and in particular to such systems which provide data transfer to and from devices or functional units, for example on a vehicle such as an aircraft.

A data bus of the type to be described herein could be employed in the control of a number of on-board solid state power switches, for example;

One known data bus system which has been developed for use on military aircraft is defined by MIL STD 1553B (DEF-STAN 00-18PT2). This "1553B" data bus system operates at 1 Mbit sec-1, the data being bi-phase, Manchester coded. Data is transferred between the data bus and the relevant remote terminals via transformer coupling means. Advantages of the known "1553B" system are good EMC performance, good common mode rejection and good D.C. isolation.

However, this system also has its drawbacks such as a complicated protocol (on account of the complexity of some of its envisaged applications) and its consequent high interface cost.

One other known high speed data bus system suitable for use in aircraft is described in EP 0,367,392A. This is a synchronous system which requires a significant proportion of the message transmitted over the bus to be used for bit synchronisation. Thus, the useful data rate is reduced.

While the high cost of a 1553B data bus system may be justifiable for the military application, its adoption for civil aviation use is a much less attractive proposition.

Thus there exists a need for a data bus system for civil aircraft use which, ideally, has all the advantages of the 1553B military standard, but is much less expensive to implement.

The object of this invention is to fulfil, at least in part, the above need.

The invention therefore consists of;

a data bus system comprising a bus controller, at least one remote terminal and a data bus for transmitting data in serial form in which said remote terminal is coupled to the data bus by transformer means,

and characterised in that the data comprises a digitally modulated carrier signal having an asynchronous character format whereby a character is defined by "start" and "stop" bits and wherein the remote terminal includes modulator and demodulator means for modulating and demodulating the carrier signal.

The use of an asynchronous system ensures efficient use of the available data rate and requires only a very simple protocol. The system is thus much simpler and less expensive to implement than a 1553 system.

Asynchronously - operated devices, in particular Universal Asynchronous Receiver/Transmitters, which are currently available will run at bit rates up to typically 200kbauds. Although this falls short of the "1553B" rate of 1Mbaud, a 200Kbaud rate is sufficient for the civil application.

However, the lower bit rate does not lend itself to efficient transfer over a 1553B type transformer coupling means. To overcome this problem, a carrier signal is provided, onto which, digital data is encoded.

Thus the invention can make use of military standard cabling and transformer coupling yet employ much less expensive interface hardware.

The data bus system in accordance with the invention may be configured to operate using time division multiplexing techniques with data being transmitted between a bus controller and remote terminals in serial form. Half-duplex transmission can conveniently be implemented.

The carrier signal may be sine or square wave for example and may be any frequency which can be efficiently transferred across a transformer. Choice of carrier frequency will also be dictated to a certain extent, of course, by the data bit rate employed.

Digital data may be modulated onto the carrier by any suitable known technique. For example, amplitude modulation of a single carrier by the data waveform.

Some embodiments of the invention will now be described, by way of example only, with reference to the drawings of which:

Figure 1 is a schematic block diagram of a data bus system according to the invention;

Figure 2 is a block diagram of a part of the system of Figure 1 shown in greater detail:

and Figure 3 is a diagram of waveforms employed in the system of Figure 1.

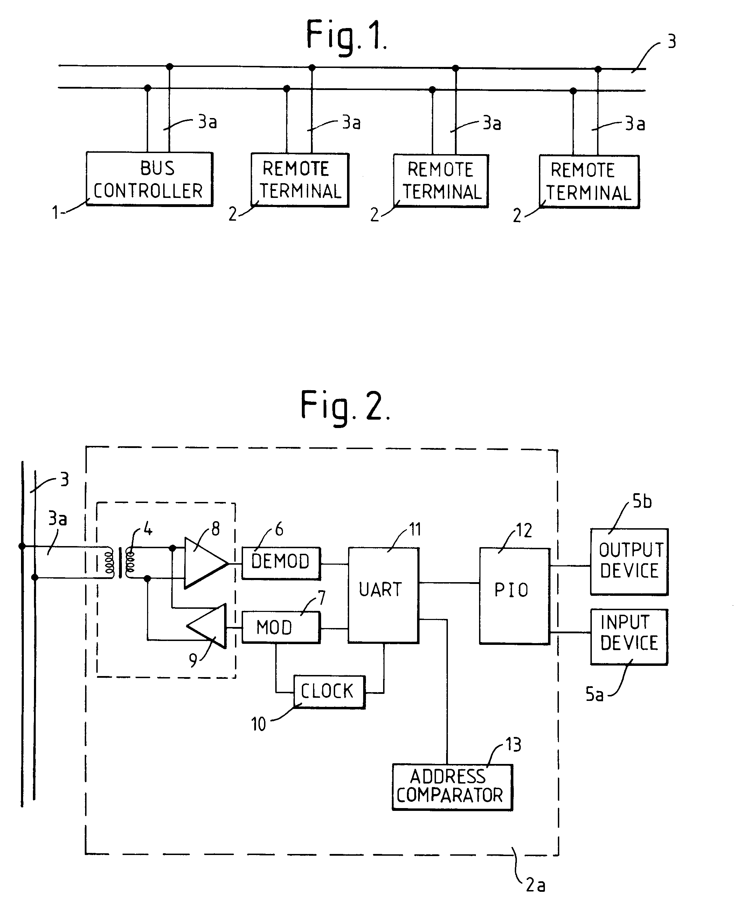

In figure 1, is shown in block diagram form, the basic constituents of the data bus system, viz:

a bus controller 1 and a plurality of remote terminals 2, all linked with a data bus 3 by means of stub cable couplers 3a. In this example, and as in the 1553b system, voltage mode coupling is employed, with a transformer, incorporated in the bus controller and each remote terminal, being connected in parallel with the two signal wires of the bus 3.

One embodiment of a remote terminal is shown in greater detail in figure 2. A remote terminal interface 2a incorporating a coupling transformer 4 is connected between the data bus 3 and input and output devices 5a and 5b respectively. The output device 5b could comprise, for example, a relay or solid state power switch. The input device 5a could comprise, for example, a microswitch.

The remote terminal interface 2a comprises a demodulator 6 and modulator 7 which are connected with the transformer 4 via buffers 8 and 9.

A clock generator 10 provides a carrier signal for the modulator 7 and timing signals for a Universal asynchronous receiver/transmitter 11 (UART). The UART 11 connects the modulator 7 and demodulator 6 with the input and output devices 5a, 5b via a parallel-input/output buffer 12. An address comparator 13 also forms a part of each remote terminal interface and functions as described below.

The purpose of the remote terminal interface 2a of Figure 2 is to enable two-way communication between the data bus 3 and the input/output devices 5a, 5b. Data on the bus 3 may also be accessed by other remote terminals and by the bus controller.

In this example, the data bus 3 functions (asynchronously) in a command/response mode, with transmission occurring in half-duplex fashion. Control of information resides solely with the bus controller 1 which initiates all transmissions.

The information flow on the data bus 3 is comprised of messages having, as an example, the following particular format: viz. a command is composed of three, multi-bit words (transmitted on the data bus 3 in serial form). The first word contains an address, unique to each remote terminal 2. This word is compared, by the address comparator 13 with a stored address (held by the comparator). If this word is recognised then the second word which comprises the data is passed to the parallel input/output buffer 12. This data is not acted upon however until the third word (which is a repeat transmission of the unique address) has been checked by the address comparator 13.

In an alternative embodiment, the third word of the command message is an error check code, eg: a cyclic redundancy check. In this case, this code is checked by appropriate circuitry (not shown) incorporated within the remote terminal interface 2a.

A response message has a similar format, composed of three words transmitted sequentially along the data bus 3. The first word contains the address of the bus controller 1. The second word is a status report, used to indicate to the bus controller 1 whether its command was correctly received by the input/output device. eg: whether the command was free from framing errors, overrun errors, parity errors and "address confirmation" errors. (If any error is detected, then the bus controller 1 could be configured to retransmit the command).

The third word of the response is used to convey status information from input devices eg: micro-switches.

Each word comprising a command message is composed of a number of bits, which are transmitted on the data bus in serial form but which are converted to parallel form by the UART for transmission to the address register 13 or via the parallel-input/output buffer 12 to the output device 5b as appropriate.

Similarly, each multi-bit word comprising the response message is generated at the input device 5a in parallel form and converted to serial form by the UART 11 for onward transmission via the data bus 3.

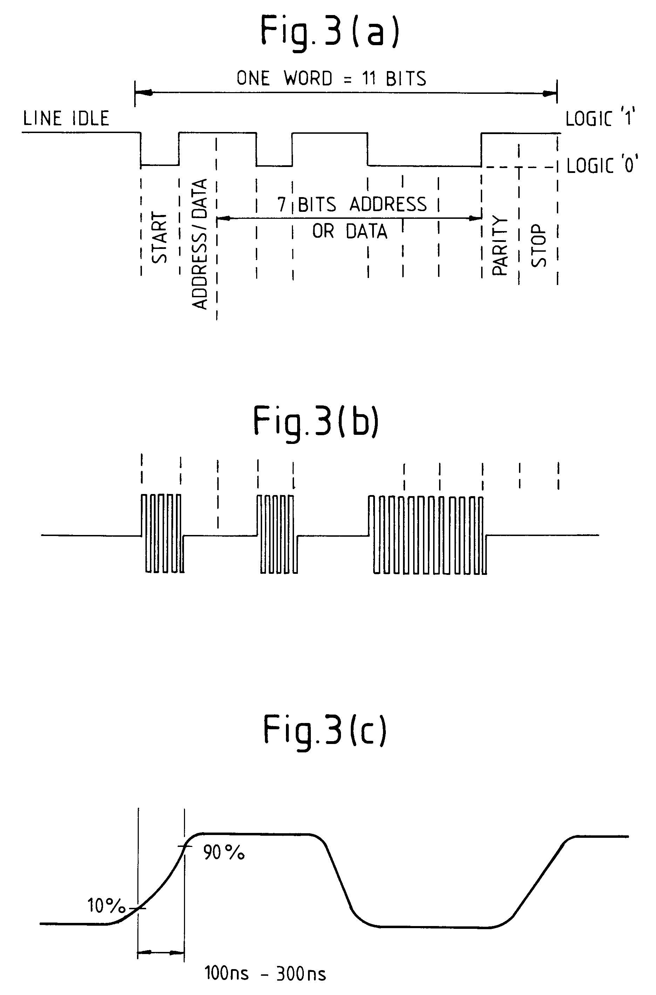

The format of each word will now be described with reference to Figure 3a. In the example, each word comprises eleven bits composed of a "start" bit to denote the commencement of a word, a bit to denote whether an address or data is to follow, seven bits of address (or data), followed by a parity bit and finally a "stop" bit to indicate the end of a word. The "start" and "stop" bits are typical of an asynchronous mode of operation. In the example shown, the "start" bit is shown as a logic '0' and the "stop" bit as a logic '1'. This choice is entirely arbitrary. The UART 11 is configured to interpret the meaning of each bit and latch the relevant data into the appropriate adjacent device. UARTS which perform in this manner are commercially available and their mode of operation is known, hence they will not be described herein in any greater detail.

The circuit of Figure 2 will operate at baud rates of up to 200kbaud, this upper limit being set by the capabilities of currently available UART devices. It has already been stated that direct transfer of data over transformer couplers cannot be achieved efficiently at this rate. Thus, a solution proposed herein is to modulate the command/response messages onto a carrier. As an example, for a data rate of 200kbaud, a carrier frequency of 800 kHz has been found to be satisfactory. This is within the limits of optimum performance of the 1553B transformer couplers (these limits being approximately 500 kHz and 1MHz).

In Figure 3b is shown an example of a word transmitted along the data bus 3. It consists of a single carrier which is 100% amplitude modulated by the digital data waveform of Figure 3a. Here a logic 0 eg: a "start" bit is denoted by a burst of the carrier signal, and a logic '1' is denoted by no signal at all being present on the bus. The carrier of 800 kHz is a square wave which is generated by the clock generator 10 of Figure 2. Preferably, the square waveform is shaped so that its rise-time lies between 100ns and 300ns (See Fig.3c). A faster rise-time than this results in poorer EMI (electromagnetic interference) performance. This carrier is modulated by the data signal generated by the input device 5a. The modulation is done at each remote terminal 2 by the modulator 7 which could comprise an analogue multiplier, for example. The resulting modulated signal is then coupled to the data bus via the buffer 9 and transformer 4 for onward transmission to the bus controller.

The signal received by a remote terminal 2 from the bus controller 1 also has the same modulated carrier form and therefore has to be demodulated before being applied to the inputs of the UART.

Thus, a demodulator 6 (which can be a full-wave rectifier for example ie an "envelope detector") is provided for removing the 800 kHz carrier from the incoming signal. The output of the demodulator 6 which is purely a digital signal is then input to the UART for further processing as described above.

The remote terminal interface of Figure 2 could, in an alternative embodiment, include a microprocessor and associated memory for performing address comparison and the necessary timing and control functions. The program required for the micro-processor can be kept very simple and short and could, conveniently be written in assembly language. Either embodiment however has the advantage of being composed of readily available and inexpensive integrated circuits.

The remote terminal interface of Figure 2 could be configured to interface with several input and output devices. In this case, the number of words in a command and/or response message is increased as appropriate.

For the aircraft application, it is envisaged that a large number of remote terminals will be distributed around the aircraft. Also, the use of dual or multiple redundant data buses of the type described herein is a further possibility.

## Claims

1. A data bus system comprising a bus controller (1), at least one remote terminal (2) and a data bus (3) for transmitting data in serial form in which said remote terminals are coupled to the data bus by transformer means (4) and characterised in that the data comprises a digitally modulated carrier signal having an asynchronous character format whereby a character is defined by "start" and "stop" bits and wherein the remote terminal (2) includes modulator (7) and demodulator (6) means for modulating and demodulating the carrier signal.

2. A data bus system according to claim 1 in which the modulator means (7) is configured to perform 100% amplitude modulation of the carrier signal by a digital signal.

3. A data bus system according to claim 1 or claim 2 in which said data includes an address code unique to a given remote terminal (2).

4. A data bus system according to claim 3 in which the remote terminal (2) includes address comparator means (13) for recognising an address code unique to said remote terminal (2).

5. A data bus system according to any preceding claim in which the remote terminal (2) includes a universal asynchronous receiver/transmitter (UART) (11).

6. A data bus system according to any preceding claim in which the carrier frequency lies substantially in the range; 500 kHz to 1MHz.

7. A data bus system according to claim 6 in which data is transmitted along the data bus (3) at a rate of 200kbaud.

8. A data bus system according to any preceding claim in which the carrier signal is a square wave, shaped so that its rise-time lies substantially between 100ns and 300ns.

# Fig.1.

# Fig.2.

## Fig.3(a)

ONE WORD = 11 BITS

LINE IDLE                                                                    LOGIC '1'

                                                                             LOGIC '0'

START
ADDRESS/DATA
7 BITS ADDRESS OR DATA
PARITY
STOP

## Fig.3(b)

## Fig.3(c)

90 %

10 %

100ns - 300ns

**European Patent Office**

# EUROPEAN SEARCH REPORT

Application Number

EP 92 30 5065

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | ELEKTRONIK. vol. 32, no. 20, October 1983, MÜNCHEN DE pages 100 - 104; R. KÜNZEL: 'Datenübertragung über das 220-V-Netz' * page 100, left column, line 4 - line 14 * * page 100, right column, line 15 - page 101, left column, line 10 * * page 101, left column, line 33 - line 35 * * page 101, right column, line 8 - line 13 * * figures 1,5 * | 1-5 | H04L12/40 |
| A | | 6,7 | |
| A | NEW ELECTRONICS, INCORPORATING ELECTRONICS TODAY. vol. 18, no. 12, June 1985, LONDON GB pages 30 - 38; 'CODED DATA TRANSCEIVER SIMPLIFIES NETWORK UPGRADE' * page 35, left column, line 48 - middle column, line 9; figures 1,2 * | 1,5-8 | |

TECHNICAL FIELDS SEARCHED (Int. Cl.5)

H04L
H04B

The present search report has been drawn up for all claims

| Place of search | Date of completion of the search | Examiner |
|---|---|---|
| THE HAGUE | 27 AUGUST 1992 | MIKKELSEN C. |